# FASCICULE DE BREVET EUROPEEN

(11) **EP 0 735 290 B1**
(45) Date de publication et mention de la délivrance du brevet: **10.01.2001**
(21) Numéro de dépôt: 96400648.0
(22) Date de dépôt: 27.03.1996
(51) Int. Cl.: F16D 13/58

(54) **Mécanisme d'embrayage à diaphragme, notamment pour véhicule automobile**
Tellerfeder-Kupplungsvorrichtung für Kraftfahrzeuge
Diaphragm clutch mechanism for an automotive vehicle

(30) Priorité: 30.03.1995 FR 9504000
(43) Date de publication de la demande: 02.10.1996
(73) Titulaire: VALEO, 75017 Paris (FR)
(72) Inventeur: Dequesnes, Laurent, 80800 Fouilloy (FR)
(74) Mandataire: Gamonal, Didier

(56) Documents cités:
- EP-A- 0 213 009
- EP-A- 0 535 702
- DE-A- 2 552 963

## Description

La présente invention concerne d'une manière générale les mécanismes d'embrayage à diaphragme, notamment pour véhicule automobile, du genre comportant un couvercle, au moins un plateau, dit plateau de pression, destiné à être solidarisé en rotation avec le couvercle en étant monté mobile axialement par rapport à celui-ci, un diaphragme, comportant une partie périphérique formant rondelle Belleville, pour action sur le plateau de pression, et une partie centrale fragmentée en doigts radiaux, pour action d'une butée de débrayage, et des moyens d'assemblage assujettissant de manière pivotante le diaphragme au couvercle en appliquant axialement ledit diaphragme, avec une charge de serrage élastique, contre un appui primaire porté par le couvercle, lesdits moyens d'assemblage comportant, d'une part, des pattes d'assemblage attelées au couvercle et ayant une partie axiale traversant le diaphragme à la faveur d'orifices élargis ménagés entre les doigts radiaux de celui-ci ainsi qu'une aile d'extrémité, pliée à la faveur d'une saignée, que présente la partie axiale, et définissant avec ladite partie axiale un coude de calage et, d'autre part, au moins une couronne, dite couronne-jonc, calée dans ledit coude de calage et adaptée à ménager pour le diaphragme un appui secondaire disposé sensiblement en regard de l'appui primaire.

Un tel mécanisme d'embrayage est adapté à être rapporté par son couvercle sur un plateau, dit plateau de réaction, solidaire d'un premier arbre, en général un arbre menant, avec insertion entre le plateau de réaction et le plateau de pression d'un disque de friction solidaire en rotation d'un deuxième arbre, en général un arbre mené, tandis que, autour de celui-ci, est disposée une pièce, dite butée de débrayage, apte à agir sur les doigts radiaux du diaphragme, pour commande en dégagement de l'embrayage ainsi formé, qui est normalement engagé ; le plateau de pression dans une telle position serrant le disque de friction contre le plateau de réaction sous la sollicitation de la partie périphérique formant rondelle Belleville du diaphragme s'appuyant sur l'appui primaire.

Un tel mécanisme est décrit dans le document FR-A-2 585 424 (US-A-4,751,991). Dans celui-ci la couronne-jonc a une forme tronconique et la saignée a un profil en forme de trapèze présentant un fond plat entre deux flancs latéraux inclinés. Cette disposition donne satisfaction car elle permet grâce à la saignée d'avoir une bonne précision de serrage.

Néanmoins, il est souhaitable de mieux contrôler encore le serrage du diaphragme entre ses appuis primaire et secondaire afin de diminuer les frottements.

La présente invention a pour objet de répondre à ce souhait et donc de créer un dispositif qui permette de mieux contrôler la charge de serrage axial exercée par la couronne-jonc sur le diaphragme tout en faisant appel à une solution économique.

Suivant l'invention un mécanisme du type sus-indiqué est caractérisé en ce que la saignée a un profil en trapèze de forme dissymétrique présentant un fond plat entre deux flancs latéraux inclinés et ayant des valeurs d'inclinaison différentes, le flanc le plus proche de l'extrémité libre des pattes d'assemblage étant plus incliné que l'autre flanc le plus proche du couvercle.

Grâce à cette disposition, lors du pliage des pattes, la matière flue dans la saignée de manière dissymétrique, ce qui permet de mieux maîtriser la charge qu'exerce la couronne-jonc sur le diaphragme et de plier un peu plus les pattes.

Cette disposition permet de plier si nécessaire l'extrémité libre des pattes selon un angle inférieur ou supérieur à 90°.

De bons résultats ont été obtenus en donnant au flanc le plus incliné une valeur d'inclinaison supérieure à 10% de celle de l'autre flanc incliné.

Par exemple l'un des flancs peut présenter une inclinaison de 62,30° et l'autre flanc une inclinaison de 77,30°.

Toutes ces dispositions permettent de bien contrôler la charge qu'exerce la couronne-jonc sur le diaphragme et de diminuer les frottements lors du basculement de celui-ci.

Les objets de la présente invention, leurs caractéristiques et leurs avantages ressortiront d'ailleurs de la description qui va suivre, à titre d'exemple, en référence aux dessins annexés sur lesquels :
- la figure 1 est une vue en coupe axiale d'un mécanisme d'embrayage suivant l'invention ;
- la figure 2 est une vue à plus grande échelle d'un détail de la figure 1 correspondant à l'encart II de cette figure 1 ;
- la figure 3 est une vue partielle en coupe axiale se rapportant à un organe de retenue avant pliage de son extrémité ;
- la figure 4 est une vue partielle en coupe axiale d'une variante de la couronne suivant l'invention.

Dans ces figures est illustré un mécanisme d'embrayage pour véhicule automobile du genre comportant successivement axialement au moins un plateau de pression 5, un diaphragme 6 de forme tronconique à l'état libre et un couvercle 1 métallique, ici en tôle emboutie.

Toutes ces pièces sont de forme annulaire.

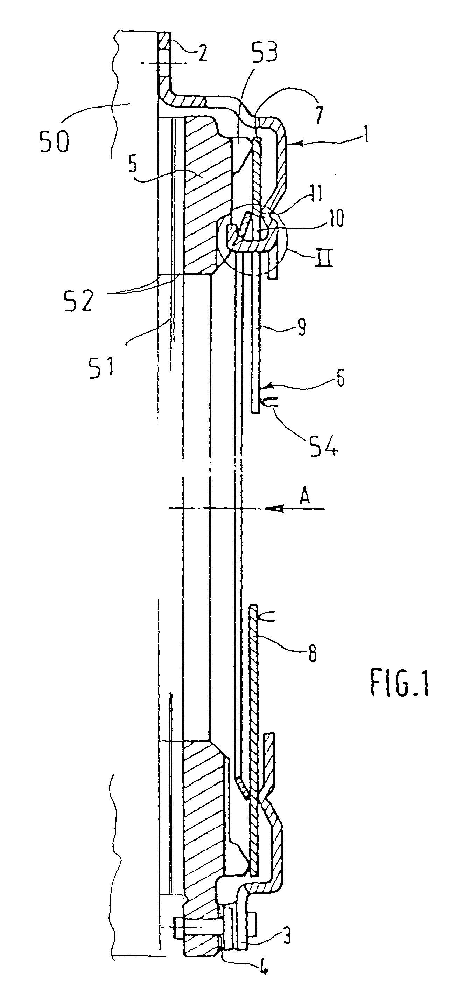

Ce mécanisme forme un sous ensemble unitaire et est adapté à être fixé par l'intermédiaire de son couvercle 1 sur un volant 50 (représenté schématiquement à la figure 1), éventuellement divisé, calé en rotation sur un arbre menant, ici le vilebrequin du moteur du véhicule.

Le diaphragme 6 prend appui sur le couvercle 1 pour action sur le plateau de réaction 5 et serrage des garnitures de frottement d'un disque de friction 51 entre le volant 50, formant plateau de réaction, et le plateau de pression 5.

Ainsi l'embrayage est normalement engagé, le couple moteur étant transmis de l'arbre menant à un arbre mené, ici l'arbre d'entrée de la boîte de vitesses, à travers le disque de friction 51 comportant un moyeu (non visible) cannelé intérieurement pour sa liaison en rotation audit arbre mené.

Ce disque de friction 51 ne faisant pas partie de l'invention ne sera pas décrit plus en détail ici. Néanmoins, pour mémoire on rappellera que ce disque 51 présente un disque de support portant à fixation à sa périphérie externe, sur chacune de ses faces, des garnitures de frottement 52. Ce disque support est accouplé au moyeu précité soit de manière rigide, par exemple par rivetage sur une bride du moyeu, soit de manière élastique par l'intermédiaire d'organes élastiques montés dans des logements pratiqués en vis-à-vis respectivement dans un voile calé en rotation, éventuellement après rattrapage du jeu angulaire, sur le moyeu et dans des rondelles de guidage disposées axialement de part et d'autre du voile et solidaires du disque support.

Pour désengager l'embrayage, il faut agir dans le sens de la flèche A (figure 1) à l'aide d'une butée de débrayage 54 (représentée partiellement à la figure 1) sur l'extrémité interne des doigts 8, que présente le diaphragme 6, pour faire cesser l'action qu'exerce le diaphragme 6 sur le plateau de pression 5 afin de libérer les garnitures de frottement 52 du disque de friction 51.

Ici la butée 54 agit en poussant sur l'extrémité interne des doigts 8 du diaphragme 6 monté de manière basculante sur le couvercle 1, de manière décrite ci-après.

Des moyens d'attelage 4 interviennent entre le couvercle 1 et le plateau de pression 5 pour liaison en rotation, avec mobilité axiale, du plateau de pression 5 avec le couvercle 1.

Plus précisément le couvercle annulaire 1 a ici une forme d'assiette creuse avec un fond troué centralement et raccordé, par l'intermédiaire d'une jupe annulaire globalement d'orientation axiale, à un rebord de fixation. Ce couvercle 1 est ici en tôle emboutie.

Le rebord et le fond sont globalement d'orientation transversale, le fond s'étendant radialement vers l'axe de l'ensemble, tandis que le rebord s'étend en direction opposée à l'axe de l'ensemble.

Les moyens d'attelage 4 consistent ici en des languettes élastiques 4 d'orientation tangentielle.

A cet effet le rebord de fixation présente une première série de plages coplanaires 2, dotée de trous pour passage d'organes de fixation, tels que des vis, du mécanisme d'embrayage au volant 50 et une deuxième série de plages coplanaires 3, décalée axialement et circonférentiellement en (alternance) par rapport à la première série 2.

Les languettes 4 sont fixées chacune à l'une de leur extrémité, ici par rivetage, à la deuxième série de plages 3 et à leur autre extrémité à une patte d'orientation radiale, que présente le plateau de pression 5 en saillie à sa périphérie externe (figure 1). Les languettes 4 sont réparties circulairement, leur nombre dépendant des applications. Ici trois jeux de languettes 4, éventuellement superposées, sont prévus.

La jupe du couvercle 1 entoure ici le disque de friction 50, le plateau de pression 5 et le diaphragme 6, le voilant 50 étant de forme plate.

Bien entendu le volant 50 peut être doté à sa périphérie d'une jupe annulaire d'orientation axiale entourant les garnitures de frottement 52 du disque de friction 51, en sorte que la profondeur du couvercle 1 dépend des applications, notamment de la configuration du volant.

Quoi qu'il en soit, de manière connue en soi, les languettes 4 assurent un rappel du plateau de pression 5 en direction du fond du couvercle 1, ce qui permet de libérer les garnitures de frottement 52 du disque de friction 51 lors de la manoeuvre de désengagement de l'embrayage.

Bien entendu les languettes 4 peuvent s'étendre radialement. En variante les moyens d'attelage 4 peuvent consister en des pattes radiales du plateau de pression 5 engagées dans des ouvertures longitudinales de la jupe du couvercle 1 pour formation d'une liaison du type tenons-mortaises.

Le diaphragme 6 comporte une partie périphérique 7 du type rondelle Belleville et une partie centrale fragmentée en doigts radiaux 8 par des fentes 9 débouchant intérieurement dans l'ouverture centrale du diaphragme et extérieurement dans des orifices élargis 10 pratiqués à la périphérie interne de la rondelle Belleville 7.

S'agissant d'un mécanisme d'embrayage du type poussé, la périphérie externe de la rondelle Belleville 7 du diaphragme 6 prend appui sur un bossage annulaire 53, ici fragmenté, du plateau de pression 5, tandis qu'à sa périphérie interne, la rondelle Belleville 7 du diaphragme 6 est intercalée entre un appui primaire 11 porté par le couvercle (le fond de celui-ci) et un appui secondaire 17 (disposé en regard de l'appui primaire) porté par des pattes d'assemblage 12 attelées au couvercle 1 (au fond de celui-ci).

Ici l'appui primaire 11 est formé par emboutissage et a une forme de cordon arrondi.

Plus précisément l'appui secondaire 17 est formé à la périphérie externe d'une rondelle d'appui 13, appelée couronne-jonc, portée par des pattes d'assemblage 12 d'orientation axiale. Ces pattes 12 traversent par une partie axiale 14 les orifices élargis 10 du diaphragme 6 et sont issues ici d'un seul tenant du fond du couvercle 1 par découpe et pliage. Ces pattes 12 sont plates et minces, c'est-à-dire qu'elles ont en section une forme rectangulaire en étant circonférentiellement de dimension supérieure et transversalement de dimension moindre. Les pattes 12 sont donc ici minces radialement et allongées circonférentiellement. Ces pattes 12 sont destinées à leur extrémité libre 15, la plus éloignée du fond du couvercle 1, à être rabattues radialement vers l'extérieur pour formation d'un coude de calage et calage axial de la couronne-jonc 13, ici de forme tronconique, avec à sa périphérie externe une arête arrondie 21, pour formation de l'appui secondaire 17.

Cette couronne 13 est disposée tout entière radialement au-delà des pattes d'assemblage 12.

Plus précisément, on engage la couronne-jonc 13 sur les parties axiales 14 des pattes d'assemblage 12 non encore rabattues, puis on effectue un pliage des pattes 12 à la presse. Pour ce faire chaque partie axiale 14 est affectée d'une saignée 16 matérialisant la ligne de pliage et facilitant celui-ci.

Cette saignée 16 a en section une forme trapézoïdale avec un fond 19 plat et deux flancs latéraux inclinés. Elle réduit localement l'épaisseur de la patte 12.

Initialement, avant assemblage d'un tel mécanisme et, notamment, avant empilage axial du couvercle 1, du diaphragme 6 et de la couronne-jonc 13, l'extrémité 15 des pattes d'assemblage 12 est droite, parallèlement à l'axe de l'ensemble en étant dans l'alignement de la partie axiale 14.

Après on effectue le pliage. Cette opération s'effectue dans une première étape à l'aide d'un appui conique, puis dans une deuxième étape à l'aide d'un autre outil pour finir de replier totalement les pattes 12.

En variante on peut procéder en une seule étape comme décrit dans le document US-A-4,109,368.

A l'issue d'un tel pliage de l'aile d'extrémité 15, les pattes 12 appliquent à la couronne-jonc 13 une précontrainte, qui présente une valeur par exemple supérieure à celle du diaphragme 6 au niveau de la butée de débrayage 54 à l'extrémité interne des doigts 8. Dans ce cas le diaphragme 6 est maintenu constamment en appui sur son appui primaire 11 avec serrage élastique du diaphragme entre ses appuis primaire 11, en forme de demi-onde, et secondaire 17.

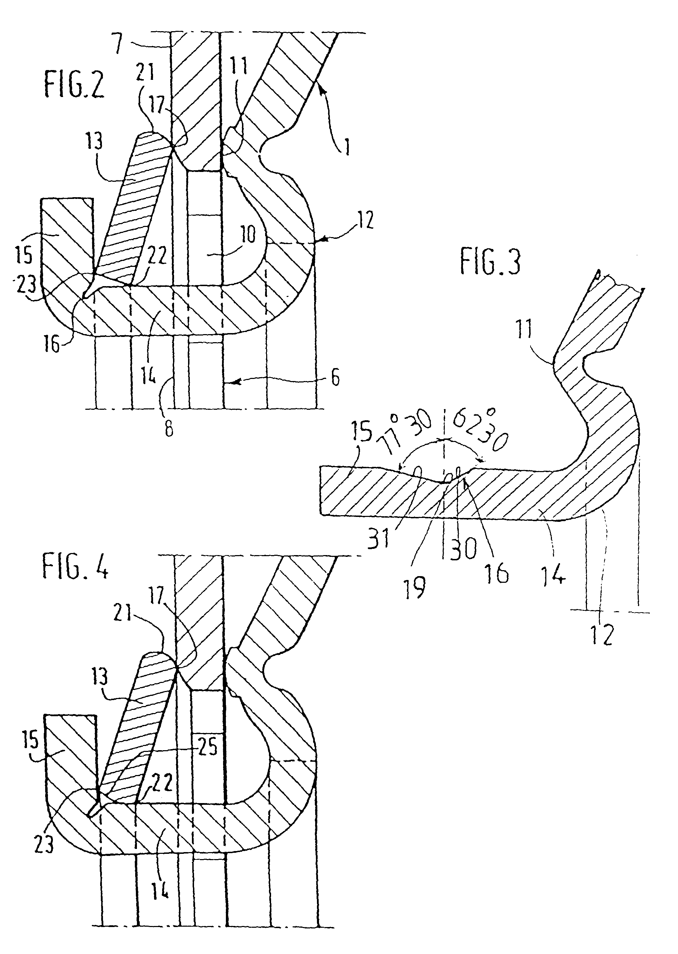

Comme mieux visible à la figure 2 la couronne-jonc 13 présente à sa périphérie interne deux arêtes internes 23,22 respectivement en contact avec l'aile repliée 15 et la partie axiale 14 des pattes 14.

Lors de ce pliage de la matière flue dans la saignée 16.

La forme de la saignée est donc très importante pour le pliage des pattes et la détermination du serrage élastique du diaphragme 6.

Pour mieux maîtriser le serrage élastique du diaphragme 6, l'invention propose de rendre dissymétrique la saignée 16 de forme trapézoïdale.

Une telle saignée 16 affecte transversalement les pattes d'assemblage 12 sur toute leur largeur et est ici ouverte en direction opposée à l'axe de l'ensemble ce qui en réduit localement l'épaisseur.

Cette saignée a en section un profil en forme de trapèze présentant un fond plat 19 entre deux flancs latéraux inclinés 30,31. Ces flancs, suivant l'invention, ont des valeurs d'inclinaison différentes, le flanc 31 le plus proche de l'extrémité libre 15 (l'aile d'extrémité 15) des pattes d'assemblage 12 étant plus incliné que l'autre flanc 30 le plus proche du couvercle 1, plus précisément du fond de celui-ci.

Ces flancs latéraux inclinés 30,31 ont ici une valeur respectivement de 62,30° et de 77,30°.

Ainsi la valeur d'inclinaison du flanc 31 est supérieure à 10% de celle de l'inclinaison de l'autre flanc 30.

Ici la profondeur de la saignée est comprise entre 0,15e et 0,30e, e étant l'épaisseur d'une patte d'assemblage 12.

Lors du pliage des pattes 12 (de l'extrémité libre de celle-ci) la matière flue et envahit de manière dissymétrique la saignée 16, ce qui permet de mieux contrôler le pliage de l'extrémité libre 15.

Ce pliage se faisant globalement selon un angle de 90°. Bien entendu cet angle peut être inférieur ou supérieur à 90° selon les applications.

Ce pliage permet d'incliner plus au moins la couronne-jonc 13 de forme tronconique et donc de modifier la charge qu'exerce la couronne-jonc 13 sur le diaphragme 6, serré ainsi élastiquement entre son appui secondaire 17 élastique et son appui primaire 11 rigide.

Ainsi le diaphragme 6 peut être maintenu en permanence contre son appui primaire 11. Dans ce cas les pattes d'assemblage 12, grâce à leur coude de calage 14,15, appliquent à la couronne-jonc 13 une précontrainte supérieure à celle du diaphragme au niveau de la butée de débrayage 54.

Grâce à la saignée 16 on contrôle bien cette précontrainte, en sorte que la force exercée par le couronne 13 sur le diaphragme 6 pour solliciter celui-ci au contact de l'appui primaire 11 est voisine de la charge maximum exercée par la butée de débrayage 54 sur les doigts 8 du diaphragme 6.

Ainsi le diaphragme 6 pivote de manière satisfaisante entre ses appuis 17,11 avec réduction des phénomènes d'hystérésis (et donc des frottements), l'appui secondaire 17 s'écartant pour tenir compte de la variation d'épaisseur du diaphragme 6 due à l'inclinaison de celui-ci.

La saignée dissymétrique favorise le mouvement de la couronne-jonc 13 qui est ainsi moins encastrée dans le coude de calage 14,15.

La charge exercée par la couronne-jonc 13 peut être supérieure à la charge exercée par la butée de débrayage 54 sur les doigts 8 du diaphragme 6 au début de l'opération de désengagement de l'embrayage, puis devenir inférieure à ladite charge exercée par la butée de débrayage 54 et éventuellement en fin d'opération de désengagement redevenir supérieure à celle-ci comme décrit dans le document US-A-4,4326,611.

En variante un jeu peut exister entre les appuis primaire 11 et secondaire 17.

D'une manière générale la saignée dissymétrique 16 permet de réduire les frottements du diaphragme 6 entre ses appuis primaire 11 et secondaire 17.

Bien entendu la présente invention n'est pas limitée à l'exemple de réalisation décrit. En particulier (figure 4) la tranche interne de la couronne-jonc 13 peut être arrondie avec réduction des phénomènes d'incrustation de la couronne 13 dans la partie axiale 14 des pattes 12.

Les pattes d'assemblage 12 peuvent appartenir à une pièce annulaire en forme de peigne traversant le fond du couvercle 1 en étant en appui sur la face dudit fond tournée à l'opposé du diaphragme 6.

En variante on peut utiliser des agrafes comme à la figure 7 du document US-A-4,326,611, lesdites agrafes traversant le fond du couvercle 1 et le diaphragme 6 pour présenter deux ailes d'extrémité repliées en direction opposée à l'axe de l'ensemble respectivement au contact de la couronne-jonc et du couvercle.

Les pattes d'assemblage 12 sont donc portées par le couvercle en étant attelées à celui-ci.

La couronne-jonc 13 peut avoir la forme d'un V à sa périphérie externe (la pointe du V formant l'appui secondaire) et être d'orientation radiale à sa périphérie interne comme à la figure 7 du document US-A-4,326,611.

Les pattes 12 peuvent être minces circonférentiellement et être allongées radialement. Cela est rendu possible car usuellement les orifices 10 sont de forme globalement rectangulaire.

Dans ce cas les pattes traversent des fenêtres pratiquées dans la couronne-jonc 13, à la périphérie interne de celle-ci et les saignées 16 s'étendent radialement.

L'appui primaire rigide 11 peut être formé par un jonc monté dans une gorge du fond du couvercle.

Le domaine d'application de l'invention s'étend également au cas où le mécanisme d'embrayage est monté sur le plateau de réaction, l'ensemble mécanisme d'embrayage - plateau de réaction pouvant former un module d'embrayage rapporté ultérieurement sur le vilebrequin du moteur.

Enfin une couronne de support peut être intercalée entre la couronne-jonc et l'extrémité 15 repliée des pattes 12.

Dans ce cas la couronne de support encaisse les efforts de pliage des pattes 12 en étant plus haute que l'extrémité repliée 15 des pattes 12. Un jeu peut alors exister entre les appuis primaire 11 et secondaire 17.

Dans tous les cas, la couronne-jonc est calée soit directement (figure 1) soit indirectement par la couronne de support, dans le coude de calage.

Avantageusement l'angle d'inclinaison entre les deux flancs est supérieur à 90°, de préférence supérieur à 100°. La différence d'inclinaison entre les flancs 30,31 permet pour un angle donné entre les deux flancs de conserver un maximum de matière entre le flanc 30 et la zone d'enracinement des pattes 12 au couvercle. On obtient des pattes 12 plus solides.

Bien entendu on peut inverser les structures, les pattes 12 pouvant s'étendre axialement en direction opposée au plateau de pression 5, qui dans ce cas, traverse par des bossages le couvercle 1.

## Revendications

1. Mécanisme d'embrayage à diaphragme notamment pour véhicule automobile, du genre comportant un couvercle (1), au moins un plateau, dit plateau de pression (5), destiné à être solidarisé en rotation avec le couvercle (1) en étant mobile par rapport à celui-ci, un diaphragme (6), comportant une partie périphérique formant rondelle Belleville (7), pour action sur le plateau de pression, et une partie centrale fragmentée en doigts radiaux (8), pour action d'une butée de débrayage (54), et des moyens assujettissant de manière pivotante le diaphragme (6) avec une charge de serrage élastique contre un appui primaire (11) porté par le couvercle (1), lesdits moyens d'assemblage comportant, d'une part, des pattes d'assemblage (12) attelées au couvercle (1) et ayant une partie axiale (14) traversant le diaphragme (6) à la faveur d'orifices élargis (10) ménagés entre les doigts radiaux (8) de celui-ci et une aile d'extrémité (15) pliée à la faveur d'une saignée (16), que présente la partie axiale (14) et définissant avec ladite partie axiale (14) un coude de calage, et, d'autre part, une couronne-jonc (13) calée dans ledit coude et adaptée à ménager pour le diaphragme (6) un appui secondaire (17) disposé sensiblement en regard de l'appui primaire (11), dans lequel la saignée (16) a un profil en forme de trapèze présentant un fond plat (19) entre deux flancs latéraux inclinés (30,31), caractérisé en ce que les flancs latéraux inclinés (30,31) ont des valeurs d'inclinaison différentes, le flanc (31) le plus proche de l'aile d'extrémité (15) des pattes d'assemblage (12) étant plus incliné que l'autre flanc (30) le plus proche du couvercle (1).

2. Mécanisme selon la revendication 1, caractérisé en ce que le flanc (31), le plus incliné, a une valeur d'inclinaison supérieure à 10% de celle de l'autre flanc (30).

3. Mécanisme selon la revendication 1 ou 2, caractérisé en ce que l'angle d'inclinaison, entre les deux flancs inclinés, est supérieur à 100°.

4. Mécanisme selon l'une quelconque des revendications 1 à 3, caractérisé en ce que les pattes d'assemblage (12) sont minces radialement et allongées circonférentiellement et en ce que lesdites pattes d'assemblage (12) sont d'un seul tenant avec le couvercle.

## Patentansprüche

1. Membranfeder-Kupplungsmechanismus, insbesondere für Kraftfahrzeuge, umfassend einen Deckel (1), wenigstens eine als Druckplatte (5) bezeichnete Platte, die für die drehfeste Verbindung mit dem Deckel (1) bestimmt und im Verhältnis zu diesem axial beweglich gelagert ist, eine Membranfeder (6) mit einem eine Tellerfeder (7) bildenden Umfangsteil zur Einwirkung auf die Druckplatte und einem in radiale Finger (8) unterteilten Mittelteil für die Einwirkung eines Ausrücklagers (54) sowie Mittel zur schwenkbaren Befestigung der Membranfeder (6) mit einer elastischen Einspannkraft an einer am Deckel (1) angebrachten Primärauflage (11), wobei die besagten Verbindungsmittel einerseits Verbindungsansätze (12) umfassen, die an den Deckel (1) angefügt sind und einen axialen Teil (14), der durch die Membranfeder (6) durch erweiterte Öffnungen (10) hindurchgeht, die zwischen deren radialen Fingern (8) angeordnet sind, sowie einen Abschlußschenkel (15) enthalten, der mittels eines Einschnitts (16), den der axiale Teil (14) aufweist, gebogen ist und zusammen mit dem besagten axialen Teil (14) einen Sicherungsbogen definiert, und andererseits einen Ringkranz (13) umfassen, der in dem besagten Sicherungsbogen gesichert ist und für die Membranfeder (6) eine Sekundärauflage (17) bildet, die in etwa gegenüber der Primärauflage (11) angeordnet ist, wobei der Einschnitt (16) ein trapezförmiges Profil mit einem flachen Boden (19) zwischen zwei geneigten Seitenflanken (30, 31) aufweist ,
**dadurch gekennzeichnet,**
daß die geneigten Seitenflanken (30, 31) unterschiedliche Neigungswerte haben, wobei die dem Abschlußschenkel (15) der Verbindungsansätze (12) am nächsten liegende Flanke (31) stärker als die dem Deckel (1) am nächsten liegende andere Flanke (30) geneigt ist.

2. Mechanismus nach Anspruch 1, **dadurch gekennzeichnet,** daß die am stärksten geneigte Flanke (31) einen Neigungswert hat, der größer als 10% des Neigungswerts der anderen Flanke (30) ist.

3. Mechanismus nach Anspruch 1 oder 2, **dadurch gekennzeichnet**, daß der Neigungswinkel zwischen den beiden geneigten Flanken größer als 100° ist.

4. Mechanismus nach einem der Ansprüche 1 bis 3, **dadurch gekennzeichnet,** daß die Verbindungsansätze (12) radial dünn und umfangsmäßig langgestreckt sind und daß die besagten Verbindungsansätze (12) einstückig mit dem Deckel ausgeführt sind.

## Claims

1. A diaphragm clutch mechanism, in particular for a motor vehicle, of the kind comprising a cover plate (1), at least one plate referred to as a pressure plate (5), which is arranged to be joined to the cover plate (1) for rotation with the cover plate but for movement with respect to it, a diaphragm (6) having a peripheral portion defining a Belleville ring (7) for acting on the pressure plate, and a central portion divided into radial fingers (8) for action of a clutch release bearing (54) thereon, and assembly means applying the diaphragm (6) pivotally and with an elastic gripping force against a primary abutment (11) carried by the cover plate (1), the said assembly means comprising, firstly, assembly lugs (12) joined to the cover plate (1), each assembly lug having an axial portion (14) which extends through the diaphragm (6) via widened apertures (10) disposed between the radial fingers (8) of the latter, and a terminal wing portion (15) which is bent back along a weakening groove (16) of the axial portion (14) and which defines, with the said axial portion (14), a locating bend, and secondly, a crown ring (13) which is located in the said bend and which is adapted to define, for the diaphragm (6), a secondary abutment (17) which is disposed facing substantially towards the primary abutment (11), wherein the weakening groove (16) has a profile in the form of a trapezium having a flat base (19) between two inclined side flanks (30, 31), characterised in that the inclined side flanks (30, 31) have different angles of inclination, the flank (31) closer to the terminal wing portion (15) of the assembly lugs (12) being more steeply inclined than the other flank (30) which is closer to the cover plate (1).

2. A mechanism according to Claim 1, characterised in that the more steeply inclined flank (31) has an angle of inclination 10% greater than that of the other flank (30).

3. A mechanism according to Claim 1 or Claim 2, characterised in that the angle of inclination between the two said inclined side flanks is greater than 100°.

4. A mechanism according to any one of Claims 1 to 3, characterised in that the assembly lugs (12) are thin in the radial direction and elongated circumferentially, and in that the said assembly lugs (12) are integral with the cover plate.
